# EUROPÄISCHE PATENTSCHRIFT

(11) **EP 2 990 240 B1**
(45) Veröffentlichungstag und Bekanntmachung des Hinweises auf die Patenterteilung: **15.03.2017**
(21) Anmeldenummer: 15183005.6
(22) Anmeldetag: 28.08.2015
(51) Int. Cl.: B60G 11/32, B60G 11/16, B60G 11/28, B60G 7/00

(54) **BAUSATZ FÜR DEN ANBAU EINER FEDER AN DER EINZELRADAUFHÄNGUNG EINES FAHRZEUGES**
KIT FOR THE ATTACHMENT OF A SPRING TO THE INDEPENDENT WHEEL SUSPENSION OF A VEHICLE
KIT DE MONTAGE D'UN RESSORT SUR LA SUSPENSION DE ROUE UNIQUE D'UN VEHICULE AUTOMOBILE

(30) Priorität: 28.08.2014 DE 102014012530
(43) Veröffentlichungstag der Anmeldung: 02.03.2016
(73) Patentinhaber: VB-Techniek B.V., 7051 HV Varsseveld (NL)
(72) Erfinder: VOORHORST, Iginio Salvatore, 7064 AV Silvolde (NL); VAN DER VELDE, Maarten, 7481 GX Haaksbergen (NL)
(74) Vertreter: Behrendt, Arne

(56) Entgegenhaltungen:
- EP-A1- 2 676 821
- EP-A2- 0 895 881
- DE-U1- 29 824 897
- US-A- 3 730 550
- US-A- 4 397 478
- US-A- 5 403 032
- US-A1- 2008 023 931
- US-A1- 2014 125 029

## Beschreibung

Die Erfindung betrifft einen Bausatz für den Anbau einer Feder an der Einzelradaufhängung eines Fahrzeuges, deren Radlenkerschwinge um eine quer zur Fahrtrichtung verlaufende Achse am Fahrzeugrahmen gelagert ist und einen sich in Fahrtrichtung erstreckenden Radtragarm aufweist, wobei der Bausatz umfasst:
- einen Anbauhalter, der lösbar an dem Radtragarm der Radlenkerschwinge festlegbar ist und eine untere Federstütze trägt
- und eine obere Federstütze, die gegenüber der unteren Federstütze an dem Fahrzeugrahmen festlegbar ist.

Derartige Bausätze werden dazu verwendet, die Laufeigenschaften, insbesondere das Federungsverhalten des Fahrgestells von leichten Nutzfahrzeugen und Lastanhängern, z.B. Wohnwagen, Motorhomes, Rettungsfahrzeugen, Bussen etc. durch Einbau von zusätzlichen Federn zu verbessern bzw. an bestimmte Last-oder Fahrbahnverhältnisse anzupassen. Die Ausrüstung der Radaufhängung mit solchen Federn kann sowohl an Neufahrzeugen als auch zur Nachrüstung an vorhandenen Fahrzeugen, gegebenenfalls zusätzlich zu bereits vorhandenen Federn, vorgenommen werden. Dabei besteht eine Schwierigkeit darin, dass meistens innerhalb der gleichen Baureihe eines Fahrzeugherstellers unterschiedliche Varianten der Radaufhängung angeboten werden, insbesondere mit unterschiedlichen Winkelstellungen der Radtragarme in Bezug auf die Horizontale. Dieser Winkel kann zum Beispiel 15 Grad, 25 Grad, 34 Grad oder auch andere Größen annehmen. Wegen der erforderlichen Bodenfreiheit benötigt man für jede Winkelstellung des Radtragarmes eine jeweils angepasste Position der unteren Federstütze relativ zum Radtragarm. Dieser Umstand macht es erforderlich, eine Vielzahl von unterschiedlichen Bausätzen bereit zu halten, wodurch die Serienproduktion, die Lagerhaltung und der Vertrieb aufwendig und fehlerhaft werden.

Es ist deshalb Aufgabe der Erfindung, den Bausatz der eingangs genannten Art dahingehend weiterzubilden, dass er ohne konstruktive Änderung der verwendeten Bauteile an Fahrgestelle mit unterschiedlicher Winkelstellung des Radtragarmes in Bezug auf die Horizontale anpassbar ist.

Zur Lösung dieser Aufgabe schlägt die Erfindung vor, dass die untere Federstütze lösbar mit dem Anbauhalter verbunden ist und in unterschiedlichen Positionen und Neigungen an dem Anbauhalter festlegbar ist.
(Unter einer lösbaren Verbindung werden hier solche Verbindungen verstanden, bei denen sich die miteinander verbundenen Teile ohne Zerstörung der Verbindungsmittel durch eine Umkehr des Verbindungsvorganges wieder voneinander trennen lassen.)

Mit dem Bausatz gemäß der Erfindung ist es erstmals möglich, die Position der unteren Federstütze relativ zu dem Anbauhalter und damit auch zu dem Radtragarm so zu verändern, dass sich auch bei einem veränderten Winkel des Radtragarmes gegen die Horizontale die jeweils richtige Position in Bezug zur Fahrbahn und zu der am Fahrzeugrahmen montierten oberen Federstütze einstellen lässt. Eine Feder (z.B. Luftfederbalg oder Schraubenfeder) mit der jeweils richtigen Länge, dem richtigen Durchmesser und dem richtigen Tragverhalten kann dann jeweils ausgewählt werden.

Bei einer ersten Ausführungsform des Bausatzes gemäß der Erfindung ist der Anbauhalter mit einem Anschlussflansch versehen, der eine Vielzahl von Montageanschlüssen für die untere Federstütze in Form von vertikal beabstandeten Montagebohrungen oder sich in vertikaler Richtung erstreckenden Schlitzen versehen ist. An diesen Bohrungen oder Schlitzen kann die untere Federstütze in unterschiedlichen Neigungen und Positionen festgelegt werden. Bei der Verwendung von Montagebohrungen als Montageanschluss kann der erforderliche Winkel zwischen dem Radtragarm und der unteren Federstütze entsprechend stufig verstellt werden. Bei Verwendung von Schlitzen als Montageanschluss ist demgegenüber auch eine stufenlose Verstellung dieses Winkels möglich.

Bei einer besonders bevorzugten Ausführungsform des Bausatzes gemäß der Erfindung ist der Anbauhalter lösbar mit einem Adapter verbunden, der mit einer Vielzahl von Montageanschlüssen für die untere Federstütze in Form von vertikal beabstandeten Montagebohrungen oder sich in vertikaler Richtung, erstreckenden Schlitzen versehen ist. Mit einem solchen Adapter lässt sich die Variabilität des Bausatzes ohne wesentlichen Mehraufwand und insbesondere ohne Veränderungen am Anbauhalter noch wesentlich erweitern.

Bei der zuletzt genannten Ausführungsform des Bausatzes ist der Adapter zweckmäßig mit dem Anbauhalter verschraubt, der seinerseits mittels U - förmiger Spannbügel an dem Radtragarm fixiert ist; wobei die Spannbügel den Radtragarm umgreifen und zugleich den Adapter gegen den Anbauhalter verspannen. Auf diese Weise werden sowohl der Adapter als auch der Anbauhalter schnell und sicher mit dem Radtragarm verbunden.

Um zu vermeiden, dass die U-förmigen Spannbügel durch Linienberührung und hohe Last den Radtragarm beschädigen, ist weiterhin vorgesehen, dass zwischen den U-förmigen Spannbügeln und dem Radtragarm eine U-förmige Lastverteilungslasche angeordnet ist, welche die von den Spannbügeln auf den Radtragarm übertragenen Kräfte großflächig verteilt.

Zur verbesserten Abstützung und Lagesicherung des Anbauhalters an dem Radtragarm ist der Anbauhalter starr mit einem Stützzapfen versehen, welcher mit einem Ende formschlüssig in eine Bohrung am Ende des Radtragarmes eingreift und am anderen Ende mit dem Adapter verschraubt ist.

Zur Anpassung des Bausatzes an unterschiedliche Spurweiten des Fahrgestells ist weiterhin vorgesehen, dass die untere Federstütze einen die Feder abstützenden Teller aufweist, dessen Position relativ zu dem Radtragarm quer zur Fahrtrichtung veränderbar ist.

Diese Veränderung kann auf besonders einfache Art und Weise dadurch erreicht werden, dass der Teller der unteren Federstütze von einer oder mehreren Befestigungslaschen getragen wird, die mit Montageanschlüssen zur Schraubbefestigung an dem Adapter bzw. dem Anbauhalter versehen sind und den Teller außermittig unterstützen. Bei dieser Ausgestaltung der unteren Federstütze und deren Befestigung können durch einen einfachen Austausch der Federstützen von der linken Fahrzeugseite auf die rechte Fahrzeugseite und umgekehrt an dem Fahrzeug zwei verschiedene Spurweiten eingestellt werden. Die Erweiterung der Spurweite entspricht dem doppelten außermittigen Versatz der Teller der Federstützen gegenüber der Schwenkebene des Adapters.

Alternativ dazu kann der Teller der unteren Federstütze von einer oder mehreren Befestigungslaschen getragen werden, die mit Montageanschlüssen zur Schraubbefestigung an dem Anbauhalter bzw. dessen Adapter versehen sind, wobei zwischen den Befestigungslaschen und dem Teller eine Langlochverstellvorrichtung vorgesehen ist, die quer zur Fahrtrichtung eine stufenlose Verstellung des Tellers relativ zu den Befestigungslaschen zulässt.

Eine zweckmäßige Ergänzung der Erfindung sieht vor, dass die Radlenkerschwinge über einen Stoßdämpferstützarm mit einem Stoßdämpfer verbunden ist, der über ein Stoßdämpferwiderlager am Fahrzeugrahmen abgestützt ist und dessen Hub dem Bewegungsweg der Feder anpassbar ist. Der Stoßdämpferstützarm kann beispielsweise auf der dem Radtragarm gegenüberliegenden Seite der Radlenkerschwinge oder an einem anderen geeigneten Ort an der Radlenkerschwinge angeordnet sein.

Die Anpassung des Bewegungsweges des Stoßdämpfers kann durch Auswahl eines entsprechenden Stoßdämpfers erfolgen oder dadurch, dass der maximale Ausfahrweg des Stoßdämpfers durch ein parallel zum Stoßdämpfer verlaufendes Fangband zwischen dem Stoßdämpferstützarm und dem Stoßdämpferwiderlager begrenzt ist. Die Wirklänge dieses Fangbandes kann entweder von vornherein richtig gewählt werden oder in unterschiedlichen Wirklängen an dem Stoßdämpferstützarm und/ oder dem Stoßdämpferwiderlager festgelegt werden. Der Einfahrweg des Stoßdämpfers wird zweckmäßig durch einen Anschlagpuffer begrenzt, dessen jeweilige Position durch Einlegen von geeigneten Distanzelementen verändert werden kann.

Schließlich ist auch die obere Federstütze relativ zum Fahrzeugrahmen verstellbar ausgebildet, um sie - falls erforderlich - der jeweiligen Position der Feder anpassen zu können.

Ausführungsbeispiele der Erfindung werden im Folgenden anhand der Zeichnung näher erläutert. Es zeigen:
- Fig. 1: in einer Explosionsdarstellung die Teile eines Bausatzes gemäß der Erfindung in einer ersten Ausführungsform;
- Fig. 2: perspektivisch eine Einzelradaufhängung ausgerüstet mit dem Bäusatz gemäß Fig. 1;
- Fig. 3: eine Seitenansicht zu Fig. 2;
- Fig.4: einen horizontalen Schnitt durch die Einzelradaufhängung gemäß Fig. 2 in der Ebene der Radachse (mit Rad);
- Fig. 5a,5b,5c,5c: vier Seitenansichten von Einzelradaufhängung (ohne Feder) mit unterschiedlichen Neigungswinkeln des Radtragarme gegen die Horizontale;
- Fig. 6: von oben (O. A. obere Ansicht) und von unten (O. A. untere Ansicht) die Einbausituation der unteren Federstütze bei normaler Spurweite;
- Fig. 7: von oben (O. A. obere Ansicht) und von unten (O. A. untere Ansicht) die Einbausituation der unteren Federstütze bei vergrößerter Spurweite;
- Fig. 8a,8b: perspektivisch von oben und von unten eine Ausführungsform der unteren Federstütze mit verstellbarem Teller;
- Fig. 9: in ähnlicher Darstellung wie in Fig. 1 eine Ausführungsform eines Bausatzes gemäß der Erfindung, hier zum Anbau einer Schraubenfeder;
- Fig. 10: perspektivisch eine Einzelradaufhängung ausgerüstet mit dem Bausatz gemäß Fig. 9;
- Fig. 11: eine Seitenansicht zu Fig. 10;

- Fig. 12: eine abgewandelte Ausführungsform der Verbindung zwischen dem Anbauhalter und der unteren Federstütze;
- Fig. 13: eine weitere abgewandelte Ausführungsform der Verbindung zwischen dem Anbauhalter und der untere Federstütze.

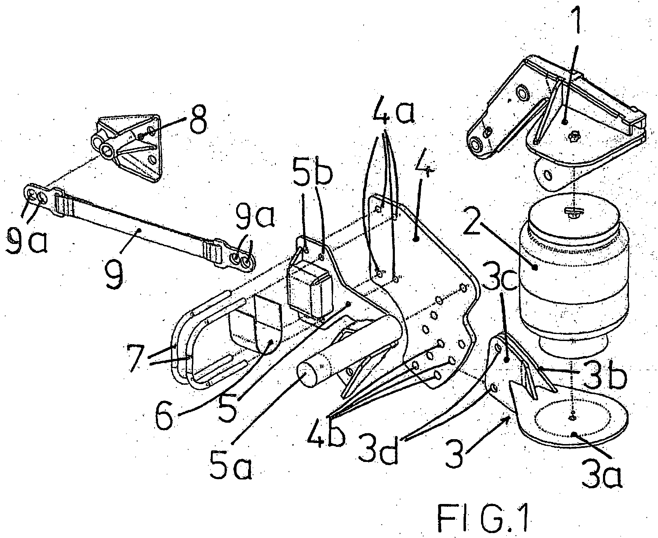

Der in Figur 1 dargestellte Bausatz für die Ausrüstung einer Einzelradaufhängung mit einer Feder weist eine mit dem Rahmen des Fahrzeuges verschraubte obere Federstütze 1, eine Feder 2 - bei diesem Ausführungsbeispiel in Form eines Luftfederbalges -, eine untere Federstütze 3, einen Adapter 4, einen Anbauhalter 5 mit Stützzapfen 5 a und Bohrungen 5b, eine U-förmige Lastverteilungslasche 6, zwei U-förmige Spannbügel 7, ein Stoßdämpferwiderlager 8 und ein Fangband 9 auf.

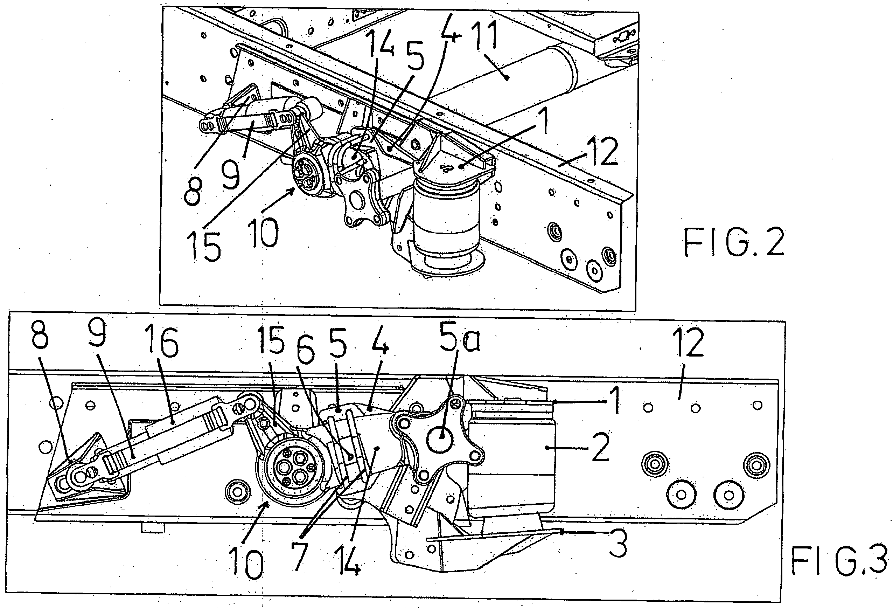

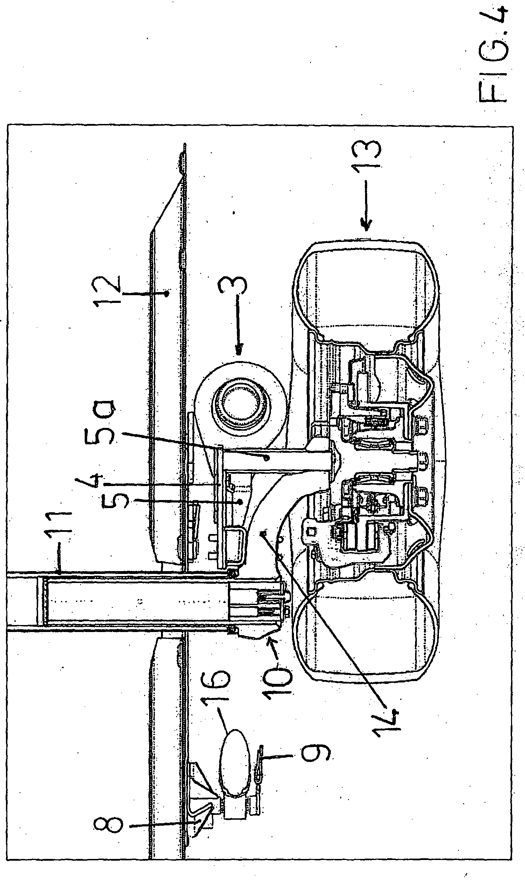

Die in den nachfolgenden Figuren 2 bis 7 dargestellten Einzelradaufhängung weisen jeweils eine Radlenkerschwinge 10 auf, die um eine quer zur Fahrtrichtung des Fahrzeuges verlaufende Achse verschwenkbar in einem Rahmenrohr 11 des Fahrzeugrahmens 12 gelagert ist und einen das Rad 13 (vergl. Figur 4) tragenden Radtragarm 14 aufweist. Weiterhin ist die Radlenkerschwinge 10 auf der dem Radtragarm 14 gegenüberliegenden Seite mit einer Stoßdämpferstütze 15 versehen, die an einem Stoßdämpfer 16 angreift, der mit seinem anderen Ende über das Stoßdämpferwiderlager 8 am Fahrzeugrahmen 12 abgestützt ist.

Zur Installation des Bausatzes werden zunächst dessen Anbauhalter 5 und der Adapter 4 an dem Radtragarm 14 befestigt. Hierzu werden die U-förmige Lastverteilerlasche 6 und die U-förmigen Spannbügel 7 auf den Radtragarm 14 aufgesteckt. Sodann werden die freien Enden der Spannbügel 7 durch die Bohrungen 5b in dem Anbauhalter 5 und die dazu passenden Bohrungen 4a in dem plattenförmigen Adapter 4 hindurchgeführt und durch auf schraubbare Spannmuttern (nicht dargestellt) derart verspannt, dass sowohl der Anbauhalter 5 als auch der plattenförmige Adapter 4 fest mit dem Radtragarm 14 verbunden sind. Dabei liegt die U-förmige Lastverteilerlasche 6 zwischen dem Spannbügel 7 und dem Radtragarm 14, sodass die von den Spannbügel 7 ausgeübten Kräfte nicht unmittelbar auf den Radtragarm 14 einwirken, sondern mithilfe der Lastverteilungslasche 6 großflächig verteilt werden. Zur zusätzlichen Lagesicherung ist außerdem der starr mit dem Anbauhalter 5 verbundene Stützzapfen 5a formschlüssig in eine am Ende des Radtragarmes 14 befindliche Bohrung eingesteckt und durch entsprechend angeordnete Schrauben mit dem Adapter 4 verschraubt. Die starre Verbindung zwischen dem Anbauhalter 5 und den Stützzäpfen 5a kann dadurch hergestellt werden, dass beide Teile ein Stück sind oder durch eine geeignete Fügetechnik starr miteinander verbunden sind. Wie Fig. 4 zusätzlich erkennen lässt, ist die das Rad 13 tragende Achskonstruktion mit dem Ende des Radtragarmes 14 verbunden und liegt in der linearen Verlängerung des Stützzapfens 5a.

Die obere Federstütze 1 wird durch Verschrauben mit dem Fahrzeugrahmen 12 verbunden. Durch eine entsprechende Anordnung der Befestigungsbohrungen im Fahrzeugrahmen sind hier ohne weiteres verschiedene Positionen möglich. Wie sich insbesondere aus den Figuren 1 sowie 6 und 7 ergibt, weist die untere Federstütze 3 einen die Feder 1 abstützende Teller 3a und zwei den plattenförmigen Adapter 4 umgreifende Befestigungslaschen 3b und 3c auf, die mit Montagebohrungen 3d zur Schraubbefestigung an dem plattenförmigen Adapter 4 versehen sind, wobei die Ebene des Spaltes zwischen den beiden Befestigungslaschen 3b und 3c, die der Ebene des plattenförmigen Adapters 4 entspricht, in Bezug auf die Mitte des Tellers 3a außermittig verläuft.

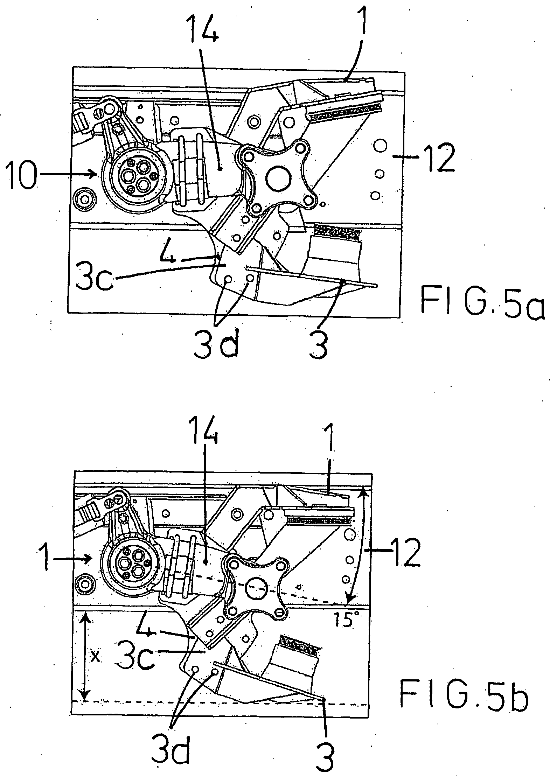

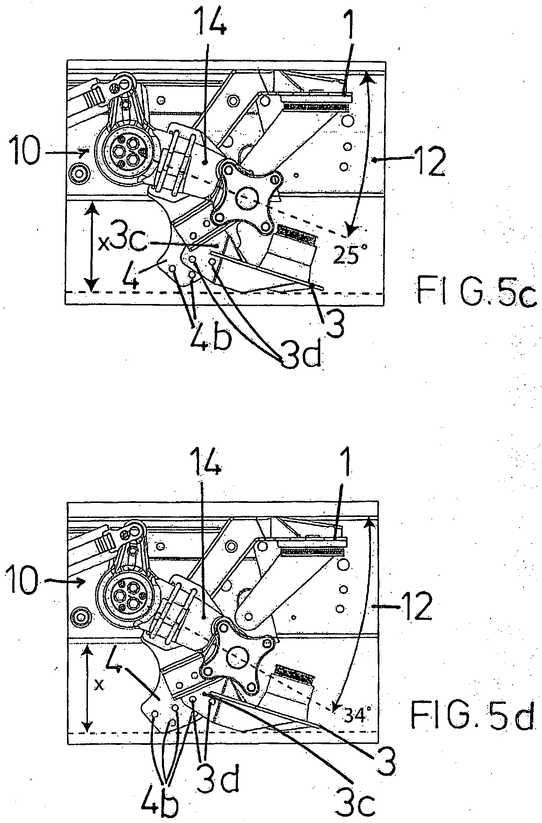

Der plattenförmig Adapter 4 weist in dem von den Befestigungslaschen 3b und 3c umgriffenen Bereich eine Reihe von übereinander angeordneten Montagebohrungen 4b auf, die eine Montage der unteren Federstütze 3 relativ zu dem Radtragarm 14 in unterschiedlichen Neigungen zulässt. Hierzu wird auf die Figuren 5a, 5b, 5c und 5d verwiesen, in denen die unterschiedlichen Positionen der unteren Federstütze 3 in Bezug auf die unterschiedlichen Winkelstellungen des Radtragarmes 14 dargestellt sind. In den Figuren 5a, 5b, 5c und 5d kann man erkennen, wie bei verschiedenen Neigungswinkeln des Radtragarmes 14 gegen die Ebene des Fahrzeugrahmens 12 durch die Wahl von geeigneten Montagebohrungen 4b in dem plattenförmigen Adapter 4 der Abstand zwischen der oberen Federstütze 1 und der unteren Federstütze 3 bei unterschiedlichen Winkelstellungen (z.B. 0 Grad, 15 Grad, 25 Grad 34 Grad) beibehalten werden kann, wozu bei zugleich eine ausreichende Bodenfreiheit beibehalten wird.

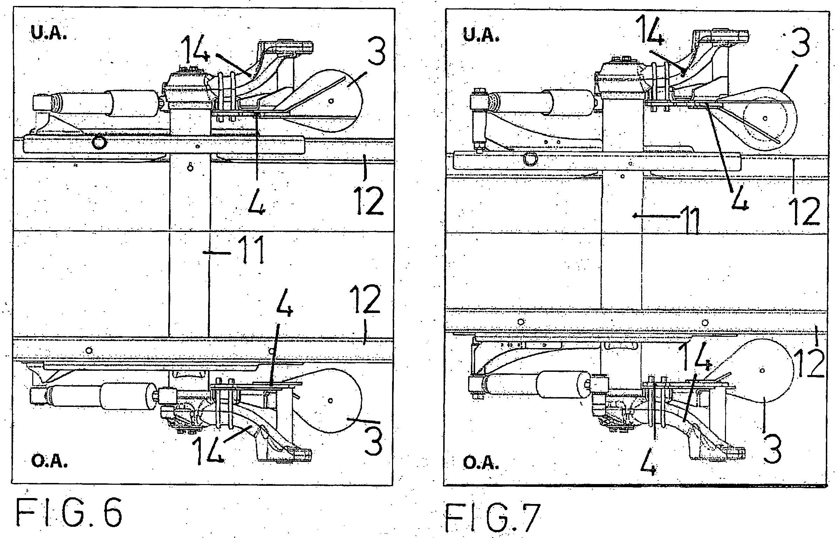

Weiterhin ist es durch die oben erläuterte außermittige Abstützung des Tellers 3a möglich, den gleichen Bausatz an Fahrzeugen mit unterschiedlichen Spurweiten zu verwenden. Hierzu wird die zunächst an der rechten Fahrzeugseite verwendete untere Federstütze 3 links zum Einsatz gebracht und umgekehrt. Die Figuren 6 und 7 veranschaulichen, wie durch einen bloßen Seitenwechsel der beiden unteren Feder stützen 3 unterschiedliche Spur weiten eingestellt werden können.

Um eine stufenlose Verstellung der Winkelstellung der unteren Federstütze 3 relativ zu dem Radtragarm 14 zu erzielen können an die Stelle der Montagebohrungen 4B in dem Adapter 4 auch Montageschlitze treten, die sich im Wesentlichen in vertikaler Richtung erstreckenden.

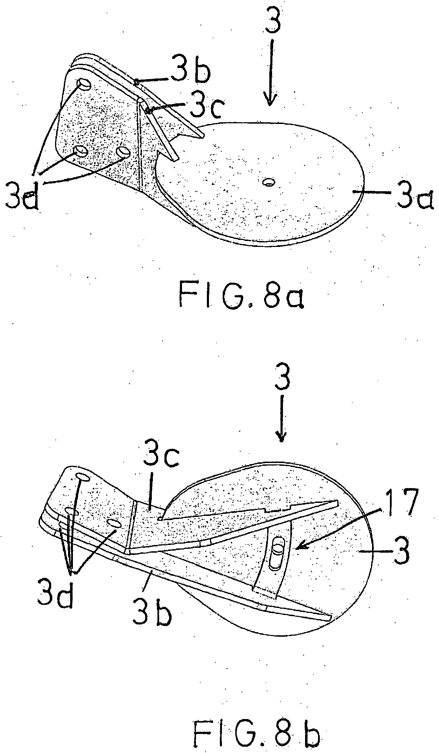

Wenn eine stufenlose Verstellung der Spurweite erwünscht ist, kann man mit einer in den Figuren 8a und 8b dargestellten Langlochverstellvorrichtung 17 zwischen dem Teller 3a der unteren Federstütze 3 und dessen Befestigungslaschen 3b und 3c den Teller 3 stufenlos auf unterschiedliche Spurweiten einstellen.

Wenn durch den Einsatz von unterschiedlich langen Federn 2 die Federwege verändert werden, kann es notwendig werden, auch die Länge des Stoßdämpfers 16 entsprechend anzupassen. Aus diesem Grund ist der Stoßdämpfer 16 auswechselbar oder in seiner Wirklänge verstellbar ausgebildet.

Außerdem gibt es die Möglichkeit, die Wirklänge des Stoßdämpfers 16 mit dem aus den Figuren 1 bis 3 hervorgehenden Fangband 9 zu begrenzen. Dieses Fangband 9 erstreckt sich zwischen dem Stoßdämpferstützarm 15 und/oder dem Stoßdämpferwiderlager 8 und ist in unterschiedlichen Wirkklängen an dem Stoßdämpferstützarm 15 und/oder dem Stoßdämpferwiderlager 8 festlegbar. Hierzu sind an beiden Enden des Fangbandes 9 Befestigungslaschen vorgesehen, die mehrere Befestigungslöcher 9a aufweisen, die in Längsrichtung des Fangbandes 9 einen Abstand voneinander haben.

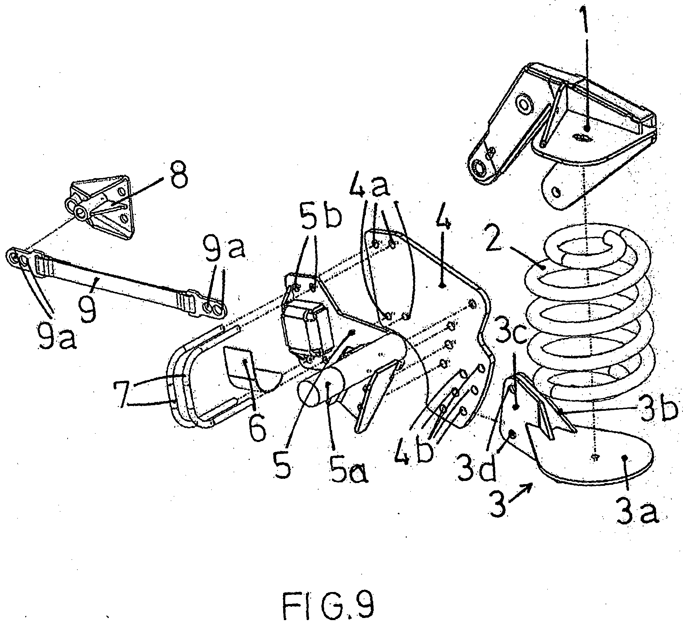

Der Bausatz gemäß Fig. 9 unterscheidet sich vom Bausatz gemäß Fig. 1 im Wesentlichen dadurch, dass hier die Feder 2 als Schraubenfeder ausgebildet ist. Dementsprechend sind hier natürlich die obere Federstütze 1 und die untere Federstütze 3 mit Befestigungsmitteln versehen, die zur Befestigung einer Schraubenfeder geeignet sind.

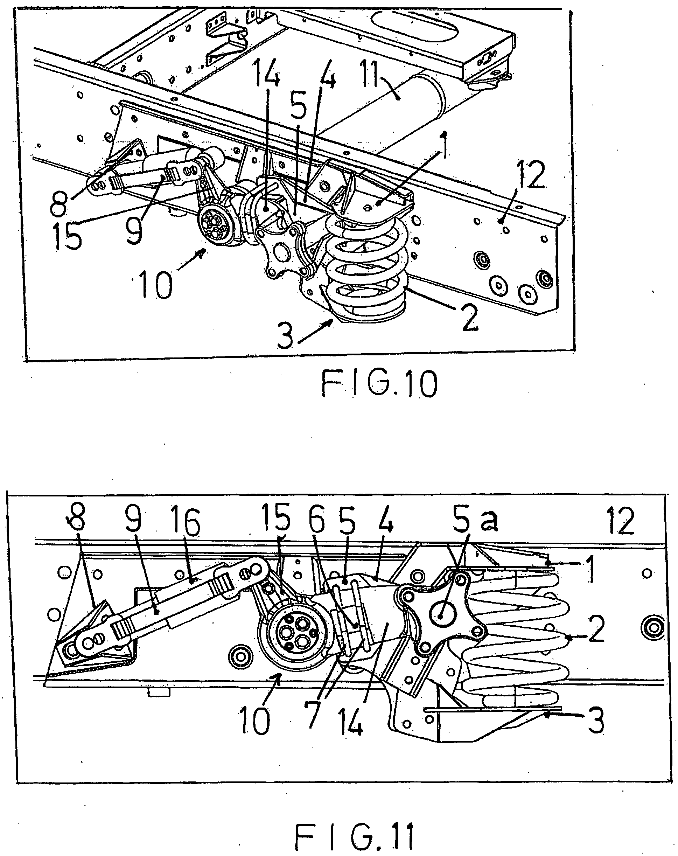

Die Figuren 10 und 11 zeigen perspektivisch und in Seitenansicht eine Einzelradaufhängung (ohne das Rad), bei der die aus Fig. 9 hervorgehende, als Schraubenfeder ausgebildete Feder 2 zum Einsatz kommt.

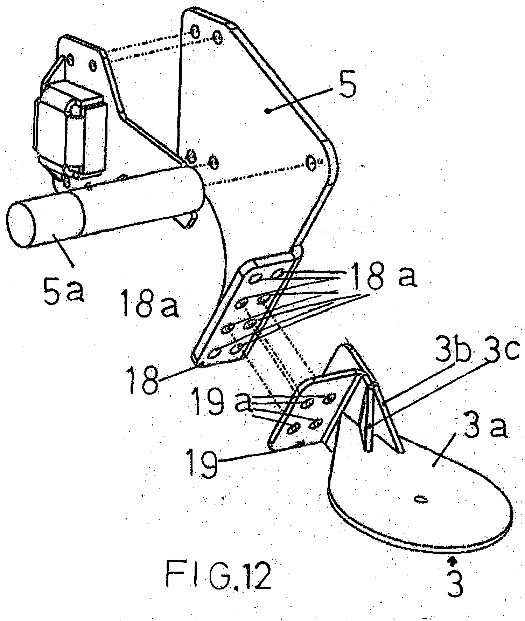

Bei der aus Fig. 12 hervorgehenden, abgewandelten Ausführungsform der Verbindung zwischen dem Anbauhalter 5 und der unteren Federstütze 3 ist der Anbauhalter 5 selbst mit einem im Wesentlichen senkrecht verlaufenden Befestigungsflansch 18 versehen, in welchem mit vertikalen Abstand zueinander Montageöffnungen in Form von Montagebohrungen 18a angeordnet sind. Zum Anschluss an diesem Befestigungsflansch18 sind die Befestigungslaschen 3b und 3c der unteren Federstütze 3 hier mit einem Befestigungsflansch 19 versehen, der ebenfalls Montagebohrungen 19a aufweist und durch Schraubverbindungen in unterschiedlichen Höhen gegen den Befestigungsflansch 18 des Anbauhalter 5 verspannt werden kann.

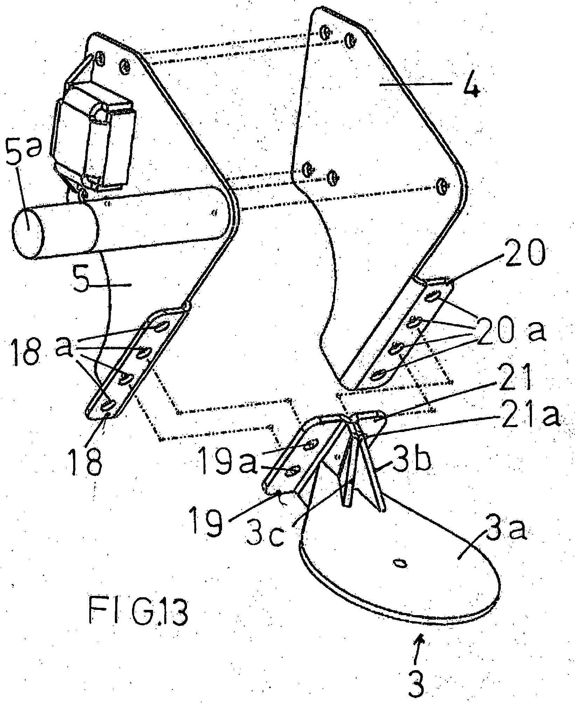

Bei der aus Figur 13 hervorgehenden Ausführungsform der Verbindung zwischen dem Anbauhalter 5 und der unteren Federstütze 3 ist abweichend vom Ausführungsbeispiel der Figur 12 zusätzlich der weiter oben erläuterte, an dem Anbauhalter 5 festlegbare plattenförmige Adapter 4 vorhanden, der hier allerdings zusätzlich mit einem Befestigungsflansch 20 versehen ist, der in der gleichen Ebene wie der Befestigungsflansch 18 am Anbauhalter 5 verläuft und ebenfalls mit in vertikalem Abstand zueinander angeordneten Montageöffnungen in Form von Montagebohrungen 20a versehen ist. Außerdem sind hier die Befestigungslaschen 3b und 3c der unteren Federstütze 3 zusätzlich mit einem weiteren Befestigungsflansch 21 versehen, der mit Montagebohrungen 21 a versehen ist und mittels Schraubverbindungen in unterschiedlicher Höhe mit dem Befestigungsflansch 20 des Adapters 4 verspannt werden kann. Durch diese zusätzliche Einbeziehung des Adapters 4 in die Verbindung zwischen Anbauhalter 5 und unterer Federstütze 3 ergibt sich gegenüber dem vorangehenden erläuterten Ausführungsbeispiel ein noch höherer belastbarer, aber dennoch lösbarer Verbund zwischen dem Anbauhalter 5 und der unteren Federstütze 3.

### Bezugszeichenliste:

- 1: obere Federstütze
- 2: Feder
- 3: untere Federstütze
- 3a: Teller der unteren Federstütze
- 3b: Befestigungslasche für den Teller der unteren Federstütze
- 3c: Befestigungslasche für den Teller der unteren Federstütze
- 3d: Montagebohrungen
- 4: plattenförmiger Adapter
- 4a: Bohrungen in Adapter
- 4b: Montagebohrungen
- 5: Anbauhalter
- 5a: Stützzapfen an Anbauhalter
- 5b: Bohrungen in Anbauhalter
- 6: Lastverteilungslasche
- 7: Spannbügel
- 8: Stoßdämpferwiderlager
- 9: Fangband
- 10: Radlenkerschwinge
- 11: Rahmenrohr
- 12: Fahrzeugrahmen
- 13: Rad
- 14: Radtragarm
- 15: Stoßdämpferstütze
- 16: Stoßdämpfer
- 17: Langlochverstellvorrichtung
- 18: Befestigungsflansch
- 18a: Montagebohrungen
- 19: Befestigungsflansch
- 19a: Montagebohrungen
- 20: Befestigungsflansch
- 20a: Montagebohrungen
- 21: Befestigungsflansch
- 21 a: Montagebohrungen

## Patentansprüche

1. Bausatz für den Anbau einer Feder (2) an der Einzelradaufhängung eines Fahrzeuges, deren Radlenkerschwinge (10) um eine quer zur Fahrtrichtung verlaufende Achse am Fahrzeugrahmen (12) gelagert ist und einen sich in Fahrtrichtung erstreckenden Radtragarm (14) aufweist, wobei der Bausatz umfasst:
- einen Anbauhalter (5), der lösbar an dem Radtragarm (14 der Radlenkerschwinge (10) festlegbar ist und eine untere Federstütze (3) trägt
- und eine obere Federstütze (1), die gegenüber der unteren Federstütze (3) am Fahrzeugrahmen (12) festlegbar ist,
**dadurch gekennzeichnet,**
**dass** die untere Federstütze (3) lösbar mit dem Anbauhalter (5) verbunden ist und in unterschiedlichen Positionen und Neigungen an dem Anbauhalter (5) festlegbar ist.

2. Bausatz nach Anspruch 1, **dadurch gekennzeichnet, dass** der Anbauhalter (5) mit einem Anschlussflansch (18) versehen ist, der mit einer Vielzahl von Montageanschlüssen für die untere Federstütze (3) in Form von vertikal beabstandeten Montagebohrungen (18a) oder sich in vertikaler Richtung erstreckenden Schlitzen versehen ist.

3. Bausatz nach Anspruch 1, **dadurch gekennzeichnet, dass** der Anbauhalter (5) lösbar mit einem Adapter (4) verbunden ist, der mit einer Vielzahl von Montageanschlüssen für die untere Federstütze (5) in Form von vertikal beabstandeten Montagebohrungen (4b) oder sich in vertikaler Richtung erstreckenden Schlitzen versehen ist.

4. Bausatz nach Anspruch 3, **dadurch gekennzeichnet, dass** der Adapter (4) mit dem Anbauhalter (5) verschraubt ist, der seinerseits mittels U-förmiger Spannbügel (7) an dem Radtragarm (4) fixierbar ist, wobei die Spannbügel (7) den Radtragarm (14) umgreifenden und zugleich den Adapter (4) gegen den Anbauhalter (5) verspannen.

5. Bausatz nach Anspruch 4, **dadurch gekennzeichnet, dass** zwischen den U-förmiger Spannbügel (7) und dem Radtragarm (14) eine U-förmiger Lastverteilerlasche (6) angeordnet ist.

6. Bausatz nach einem der Ansprüche 1-4, **dadurch gekennzeichnet, dass** der Anbauhalter (5) starr mit einem Stützzapfen (5a) verbunden ist, welcher mit einem Ende formschlüssig in eine Bohrung am Ende des Radtragarmes (14) eingreift und am anderen Ende mit dem Adapter (4) verschraubt ist

7. Bausatz nach Anspruch 1, **dadurch gekennzeichnet, dass** die untere Federstütze (3) einen die Feder (2) abstützenden Teller (3a) aufweist, dessen Position relativ zu dem Radtragarm (14) quer zur Fahrtrichtung veränderbar ist.

8. Bausatz nach Anspruch 7, **dadurch gekennzeichnet, dass** der Teller (3a) der unteren Federstütze (3) von einer oder mehreren Befestigungslaschen (3b und 3c) getragen wird, die mit Montageanschlüssen in Form von Montagebohrungen (3d) zur Schraubbefestigung an dem Adapter (4) versehen sind und den Teller (3a) außermittig unterstützen.

9. Bausatz nach Anspruch 7, **dadurch gekennzeichnet, dass** der Teller (3a) der unteren Federstütze (3) von einer oder mehreren Befestigungslaschen (3b und 3c) getragen wird, die mit Montageanschlüssen in Form von Montagebohrungen (3d) zur Schraubbefestigung an dem Adapter (4) versehen sind, wobei zwischen den Befestigungslaschen (3b und 3c) und dem Teller (3a) eine Langlochverstellvorrichtung (17) vorgesehen ist, die quer zur Fahrtrichtung eine stufenlose Verstellung des Tellers (3a) relativ zu den Befestigungslaschen (3b und 3c) zulässt.

10. Bausatz nach Anspruch 1, **dadurch gekennzeichnet, dass** die Radlenkerschwinge (10) über einen Stoßdämpferstützarm (15) mit einem Stoßdämpfer (16) versehen ist, der über ein Stoßdämpferwiderlager (8) am Fahrzeugrahmen (12) abgestützt ist und dessen Hub an den Bewegungsweg der Feder (2) anpassbar ist.

11. Bausatz nach Anspruch 10, **dadurch gekennzeichnet, dass** der maximale Ausfahrweg des Stoßdämpfers (16) durch ein parallel zum Stoßdämpfer (16) verlaufendes Fangband(9) zwischen dem Stoßdämpferstützarm (15) und dem Stoßdämpferwiderlager (8) begrenzt ist.

12. Bausatz nach Anspruch 11, **dadurch gekennzeichnet, dass** das Fangband (9) in unterschiedlichen Wirkklängen an dem Stoßdämpferstützarm (15) und/oder dem Stoßdämpferwiderlager (8) festlegbar ist.

13. Bausatz nach einem oder mehreren der Ansprüche 1-12, **dadurch gekennzeichnet, dass** auch die obere Federstütze (1) relativ zum Fahrzeugrahmen (12) verstellbar ausgebildet ist.

14. Bausatz nach Anspruch 10, **dadurch gekennzeichnet, dass** der Einfahrweg des Stoßdämpfers (16) durch einen Anschlagpuffer begrenzt ist, dessen jeweilige Position durch einsetzbare Distanzelemente veränderbar ist.

## Claims

1. Kit for the attachment of a spring (2) to the individual wheel suspension of a vehicle, the wheel link rocker (10) of which is mounted on the vehicle frame (12) about an axis running transversely with respect to the direction of travel and has a wheel supporting arm (14) extending in the direction of travel, wherein the kit comprises:
- an attachment holder (5) which is securable releasably to the wheel supporting arm (14) of the wheel link rocker (10) and bears a lower spring support (3),
- and an upper spring support (1) which can be secured to the vehicle frame (12) opposite the lower spring support (3),
**characterized in that** the lower spring support (3) is connected releasably to the attachment holder (5) and can be secured on the attachment holder (5) in different positions and inclinations.

2. Kit according to Claim 1, **characterized in that** the attachment holder (5) is provided with a connecting flange (18) which is provided a multiplicity of installation connections for the lower spring support (3) in the form of vertically spaced-apart installation bores (18a) or slots extending in the vertical direction.

3. Kit according to Claim 1, **characterized in that** the attachment holder (5) is connected releasably to an adapter (4) which is provided with a multiplicity of installation connections for the lower spring support (5) in the form of vertically spaced-apart installation bores (4b) or slots extending in the vertical direction.

4. Kit according to Claim 3, **characterized in that** the adaptor (4) is screwed to the attachment holder (5) which, for its part, can be fixed on the wheel supporting arm (4) by means of U-shaped clamping clips (7), wherein the clamping clips (7) engage around the wheel supporting arm (14) and at the same time brace the adapter (4) against the attachment holder (5).

5. Kit according to Claim 4, **characterized in that** a U-shaped load-distributing tab (6) is arranged between the U-shaped clamping clip (7) and the wheel supporting arm (14).

6. Kit according to one of Claims 1-4, **characterized in that** the attachment holder (5) is rigidly connected to a support pin (5a) which engages at one end in a form-fitting manner in a bore at the end of the wheel supporting arm (14) and is screwed at the other end to the adapter (4).

7. Kit according to Claim 1, **characterized in that** the lower spring support (3) has a disc (3a) which supports the spring (2) and the position of which relative to the wheel supporting arm (14) can be changed transversely with respect to the direction of travel.

8. Kit according to Claim 7, **characterized in that** the plate (3a) of the lower spring support (3) is supported by one or more fastening tabs (3b and 3c) which are provided with installation connections in the form of installation bores (3d) for the screw fastening to the adapter (4) and support the disc (3a) eccentrically.

9. Kit according to Claim 7, **characterized in that** the disc (3a) of the lower spring support (3) is supported by one or more fastening tabs (3b and 3c) which are provided with installation connections in the form of installation bores (3d) for the screw fastening to the adapter (4), wherein an elongated hole adjustment device (17) is provided between the fastening tabs (3b and 3c) and the plate (3a) and permits an infinitely variable adjustment of the disc (3a) relative to the fastening tabs (3b and 3c) transversely with respect to the direction of travel.

10. Kit according to Claim 1, **characterized in that** the wheel link rocker (10) is provided with a shock absorber (16) via a shock absorber support arm (15), said shock absorber being supported on the vehicle frame (12) via a shock absorber abutment (8) and the travel of the shock absorber being adaptable to the movement distance of the spring (2).

11. Kit according to Claim 10, **characterized in that** the maximum extension distance of the shock absorber (16) is limited by a catch strap (9), which runs parallel to the shock absorber (16), between the shock absorber support arm (15) and the shock absorber abutment (8).

12. Kit according to Claim 11, **characterized in that** the catch strap (9) can be secured on the shock absorber support arm (15) and/or the shock absorber abutment (8) in different effective lengths.

13. Kit according to one of Claims 1-12, **characterized in that** the upper spring support (1) is also designed to be adjustable relative to the vehicle frame (12).

14. Kit according to Claim 10, **characterized in that** the retraction distance of the shock absorber (16) is limited by a stop buffer, the respective position of which can be changed by insertable spacer elements.

## Revendications

1. Kit de montage d'un ressort (2) sur la suspension de roue unique d'un véhicule, dont le bras oscillant de roue (10) est supporté sur le châssis de véhicule (12) autour d'un axe s'étendant transversalement à la direction de conduite et présente un bras de support de roue (14) s'étendant dans la direction de conduite, le kit comprenant :
- un support de montage (5) qui peut être fixé de manière amovible au bras de support de roue (14) du bras oscillant de roue (10) et qui porte un support de ressort inférieur (3),
- et un support de ressort supérieur (1) qui peut être fixé par rapport au support de ressort inférieur (3) sur le châssis de véhicule (12),
**caractérisé en ce que**
le support de ressort inférieur (3) est connecté de manière amovible au support de montage (5) et peut être fixé dans différentes positions et inclinaisons sur le support de montage (5).

2. Kit de montage selon la revendication 1, **caractérisé en ce que** le support de montage (5) est pourvu d'une bride de raccordement (18) qui est pourvu une pluralité de raccords de montage pour le support de ressort inférieur (3) sous la forme d'alésages de montage (18a) espacés verticalement ou de fentes s'étendant dans la direction verticale.

3. Kit de montage selon la revendication 1, **caractérisé en ce que** le support de montage (5) est connecté de manière amovible à un adaptateur (4) qui est pourvu d'une pluralité de raccords de montage pour le support de ressort inférieur (5) sous la forme d'alésages de montage (4b) espacés verticalement ou de fentes s'étendant dans la direction verticale.

4. Kit de montage selon la revendication 3, **caractérisé en ce que** l'adaptateur (4) est vissé au support de montage (5) qui peut être fixé pour sa part au moyen d'étriers de serrage (7) en forme de U au bras de support de roue (4), les étriers de serrage (7) venant en prise autour du bras de support de roue (14) et serrant en même temps l'adaptateur (4) contre le support de montage (5).

5. Kit de montage selon la revendication 4, **caractérisé en ce qu'**entre les étriers de serrage en forme de U (7) et le bras de support de roue (14) est disposée une patte de distribution de charge en forme de U (6).

6. Kit de montage selon l'une quelconque des revendications 1 à 4, **caractérisé en ce que** le support de montage (5) est connecté rigidement à un tourillon de support (5a) qui s'engage par une extrémité par engagement par correspondance de formes dans un alésage à l'extrémité du bras de support de roue (14) et qui est vissé à l'autre extrémité à l'adaptateur (4).

7. Kit de montage selon la revendication 1, **caractérisé en ce que** le support de ressort inférieur (3) présente un plateau (3a) supportant le ressort (2), dont la position peut être modifiée par rapport au bras de support de roue (14) transversalement à la direction de conduite.

8. Kit de montage selon la revendication 7, **caractérisé en ce que** le plateau (3a) du support de ressort inférieur (3) est porté par une ou plusieurs pattes de fixation (3b et 3c) qui sont pourvues de raccords de montage sous la forme d'alésages de montage (3d) pour la fixation par vissage à l'adaptateur (4) et qui supportent le plateau (3a) de manière excentrée.

9. Kit de montage selon la revendication 7, **caractérisé en ce que** le plateau (3a) du support de ressort inférieur (3) est porté par une ou plusieurs pattes de fixation (3b et 3c) qui sont pourvues de raccords de montage sous la forme d'alésages de montage (3d) pour la fixation par vissage à l'adaptateur (4), un dispositif de réglage à trou oblong (17) étant prévu entre les pattes de fixation (3b et 3c) et le plateau (3a), lequel permet, transversalement à la direction de conduite, un réglage en continu du plateau (3a) par rapport aux pattes de fixation (3b et 3c).

10. Kit de montage selon la revendication 1, **caractérisé en ce que** le bras oscillant de roue (10) est pourvu, par le biais d'un bras de support d'amortisseur (15), d'un amortisseur (16) qui est supporté par le biais d'une butée d'amortisseur (8) contre le châssis de véhicule (12) et dont la course peut être adaptée à la course de déplacement du ressort (2).

11. Kit de montage selon la revendication 10, **caractérisé en ce que** la course de sortie maximale de l'amortisseur (16) est limitée par une bande de réceptions (9) s'étendant parallèlement à l'amortisseur (16) entre le bras de support d'amortisseur (15) et la butée d'amortisseur (8).

12. Kit de montage selon la revendication 11, **caractérisé en ce que** la bande de réception (9) peut être fixée à des longueurs d'actions différentes sur le bras de support d'amortisseur (15) et/ou sur la butée d'amortisseur (8).

13. Kit de montage selon l'une quelconque ou plusieurs des revendications 1 à 12, **caractérisé en ce que** le support de ressort supérieur (1) est également réalisé de manière ajustable par rapport au châssis de véhicule (12).

14. Kit de montage selon la revendication 10, **caractérisé en ce que** la course d'enfoncement de l'amortisseur (16) est limitée par un tampon de butée dont la position respective peut être modifiée par des éléments d'espacement insérables.
